# EUROPEAN PATENT APPLICATION

(11) **EP 1 220 513 A2**
(43) Date of publication of application: **03.07.2002**
(21) Application number: 01310780.0
(22) Date of filing: 21.12.2001
(51) Int. Cl.: H04L 29/06, G06F 17/30

(54) **Method and apparatus for handling services by a proxy**

(30) Priority: 26.12.2000 JP 2000395399
(71) Applicant: NTT DoCoMo, Inc., Tokyo 100-6150 (JP)
(72) Inventor: Igarashi, Ken, Yokohama-shi, Kanagawa 221-0075 (JP)
(74) Representative: Beresford, Keith Denis Lewis

(57) **Abstract**

A possible service interruption unintended by a user is prevented by executing a corresponding service using a proxy. A user's terminal (101) and a WWW server (102) are connected together via a network (103). The network (103) has a service agent (SA 111) that executes a proxy service control method. The SA (111) has a session storage section (121) connected to a WWW server (102) and application (114) to store sessions, a result notifying section (122) connected to the MUA (112) and a proxy request section (123) connected to the WWW server (102) to make request for proxy control, and a media converting section (124) connected to MTA (113) and a proxy reception section (125) connected to the WWW server (102) to obtain information on behalf of a user.

## Description

The present invention relates to a method and apparatus for handling services by a proxy, and more specifically, to a method and apparatus for handling services by a proxy, in which a service that cannot be completed by a user is executed by an agent on behalf of the user and in which the user is notified of the results of the completion.

Downloading of information required by a user, from a WWW (World Wide Web) server, is known as a method for distributing information over the Internet. If the user has a plurality of computers and has constructed a LAN (Local Area Network), a proxy server is generally used to connect the LAN to the Internet. The proxy server has various functions such as the one of limiting packets flowing from the Internet into the LAN, on the basis of predetermined security packets.

Further, the proxy server has a cache function represented by a httpd (hyper text transfer protocol daemon). With the cache function, packets passing through the proxy server are sequentially accumulated, and if data requested by the user has been accumulated in the proxy server, the proxy server sends the data back to the user. To download information from the WWW server, the cache function enables the reduction of traffic to the WWW server, which actually transmits data.

However, the cache function does not accumulate data on behalf of the user during a service interruption unintended by the user, that is, a service interruption due to downloading. Thus, disadvantageously, information is not ensured to be transferred during a service interruption.

The user has no methods for dealing with a service interruption caused by a failure in the WWW server or the disconnection of the line. Another problem is that the user does not know when the service will be resumed.

It is an object of the present invention to provide a proxy service control method and apparatus which prevents a service interruption unintended by the user, by allowing an agent to execute the service on behalf of the user.

To attain this object, the present invention provides a proxy service control method for executing, on behalf of an application stored in a user's terminal, a service being provided on a session set between the application and a server, the method being characterized by comprising; a storage step of storing session information on the session in response to the user's request; a monitor step of monitoring whether or not the session is being continued between the application and the server; a proxy step of continuing the session with the server on behalf of the application on the basis of the session information stored in the storage step, if it is determined in the monitor step that the session has been interrupted; and a transfer step of transferring the service on the session received in the proxy step, to the application.

According to this method, if a service interruption unintended by the user occurs, the service can be completed on behalf of the user by reproducing the session on the basis of the stored session information.

The proxy service control method further comprises a detection step of detecting an ability of the application to receive the service and a conversion step of converting the service on the session received in the proxy step, into a different reception form on the basis of the ability detected in the detection step, and in that the transfer step transfers the service in the reception form converted in the conversion step.

According to this method, the service receiving method is converted depending on the ability of the user's terminal to receive services, thereby ensuring that information is transferred.

The above and other objects, effects, features and advantages of the present invention will become more apparent from the following description of embodiments thereof taken in conjunction with the accompanying drawings.
Fig. 1 is a functional block diagram illustrating a proxy service control method according to an embodiment of the present invention;
Fig. 2 is a flow chart showing the proxy service control method according to the embodiment of the present invention; and
Fig. 3 is a flow chart showing a media converting method in the proxy service control method according to the embodiment of the present invention.

An embodiment of the present invention will be described below in detail with reference to the drawings.

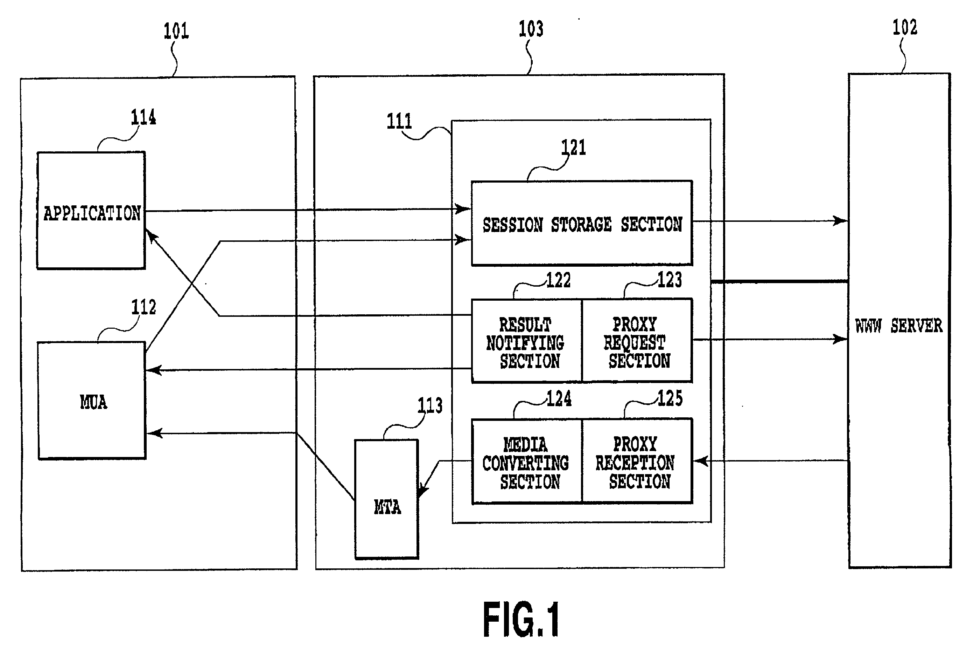

Fig. 1 shows a functional block diagram of a proxy service control method according to the embodiment of the present invention. A user's terminal 101 that receives services and a WWW server 102 that provides services are connected together via a network 103. The network 103 has a software module composed of a service agent (hereinafter referred to as an "SA") 111 that executes the proxy service control method according to the present invention and a mail transfer agent (hereinafter referred to as a "MTA") 113 that controls the transfer of mails. In this regard, the SA 111 may be constructed as a proxy service control apparatus according to the present invention or as a general-purpose computer that executes the proxy service control method.

The terminal 101 has an application 114 that serves to receive services and a mail user agent (hereinafter referred to as a "MUA") 112 that controls the transmission and reception of mails. This embodiment will be described in conjunction with the case where the application 114 acts as an agent that executes a service on behalf of a user and the case where the MUA 112 acts as the same agent, but the agent may be either of them or another application such as a browser, for example.

The SA 111 has a session storage section 121 connected to the WWW server 102, application 114, and MUA 112 to store sessions and corresponding to storage means, a result notifying section 122 connected to a proxy request section 123, the application 114, and the MUA 112, the proxy request section 123 being connected to the WWW server 102 to make request for proxy control and corresponding to proxy means, a proxy reception section 125 connected to the WWW server 102 to obtain information on behalf of a user and corresponding to monitor means, and a media converting section 124 connected to the MTA 113 and corresponding to transfer means.

With this construction, the session storage section 121 of the SA 111 stores a session on behalf of a user if the user makes a corresponding request. If a fault occurs in the WWW server 102 to stop its services and the transfer of information is interrupted, the proxy request section 123 transmits the user's request to the WWW server on behalf of the user. The proxy request section 123 reproduces the session stored in the session storage section 121. Upon receiving the acceptance of the service request from the WWW server 102, the result notifying section 122 determines whether or not the user can continue to receive the service, and if so, notifies the application 114 of the result.

The proxy reception section 125 monitors the connection of the session stored in the session storage section 121. For example, if information is being distributed to the user according to the HTTP (Hyper Text Transfer Protocol) and the line is disconnected before the user receives an HTTP response, the proxy reception section 125 receives the information on behalf of the user. If the media converting section 124 checks the abilities of the user's MUA 112 to determine that the MUA 112 can receive the information by itself, the media converting section 124 converts the received information into an electronic mail form and transmits it to the MTA 113. If the MUA 112 cannot receive the information, the media converting section 124 converts the information into an electronic mail form corresponding to the abilities of the MUA 112 and then transmits the converted information to the MTA 113.

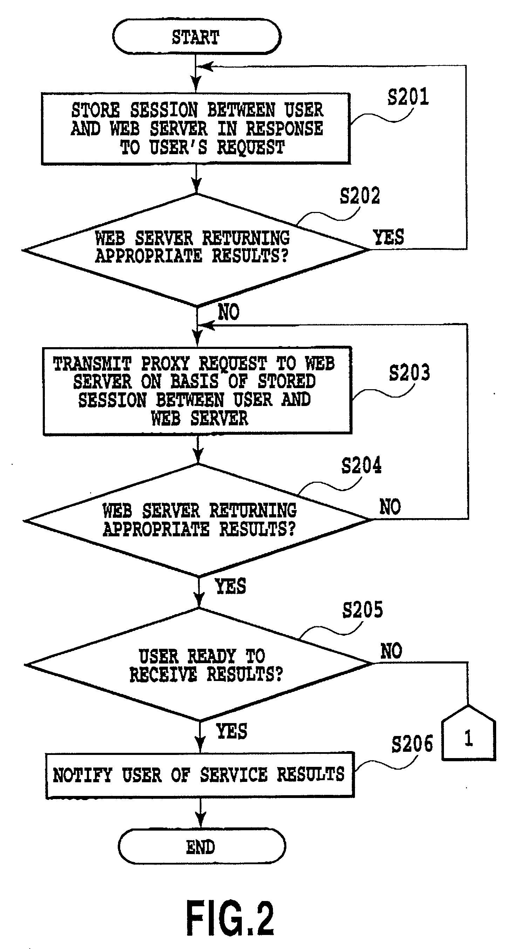

Fig. 2 shows the proxy service control method according to the embodiment of the present invention. The session between the user's terminal 101 and the WWW server 102 is stored in the session storage section 121 (S201). For example, if the HTTP is being used, the session storage section 121 stores HTTP requests such as GET and POST which are transmitted from the user's terminal 101 to the WWW server 102 and HTTP responses returned from the WWW server 102 to the user's terminal 101.

For the stored session, the session storage section 121 monitors whether or not appropriate results for the user's request are being returned by the WWW server 102 (S202). If appropriate results are not being returned, the proxy request section 123 transmits the user's request to the WWW server 102 on behalf of the user (S203). The session storage section continues to monitor whether or not appropriate results for the user's request are being returned, and if not, repeats transmitting the user's request to the WWW server on behalf of the user (S204).

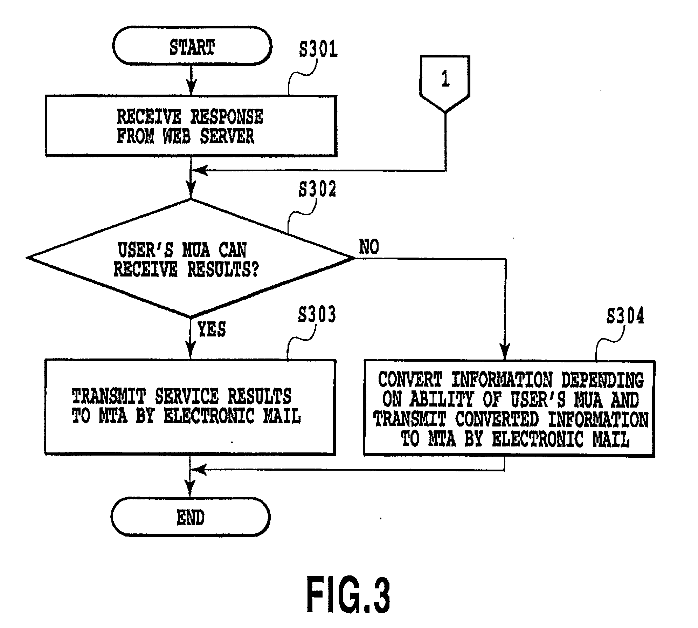

Upon receiving the acceptance of the user's request from the WWW server 102, the result notifying section 122 determines whether or not the user can continue to receive the service (S205). If the user can continue to receive the service, the result notifying section 122 notifies the application 114 of the result (S206), and transmits the received information directly to the user to complete the process. If the user cannot receive the service, the procedure shifts to a process of transmitting information after a media conversion, described later in Fig. 3.

Fig. 3 shows a media converting method in the proxy service control method according to the embodiment of the present invention. The proxy reception section 125 receives a response to the user's request which has been transmitted by the WWW server 102 (S301). For example, if the user is receiving distributed information according to the HTTP and if the line is disconnected while the user is receiving an HTTP response, the proxy reception section 125 determines that a service interruption unintended by the user occurs, to receive the information on behalf of the user.

The media converting section 124 checks the abilities of the user's MUA 112 to determine whether or not the MUA 112 can receive the information by itself (S302). If the MUA 112 can receive the information by itself, the media converting section 124 converts the received information into an electronic mail form and transmits it to the MTA 113 (S303). If the MUA 112 cannot receive the information. the media converting section 124 converts the information into an electronic mail form corresponding to the abilities of the MUA 112 and then transmits the converted information to the MTA 113 (S304).

For example, an explanation will be given of the case where the user is receiving an information providing service from the WWW server using a document in the HTML (Hyper Test Markup Language) form. If the media converting section 124 determines that the user's MUA 112 can receive only documents of a text form, one of the electronic mail forms, then it converts the document in the HTML form into one in the text form. Specifically, absolute paths of HTML document links are displayed in the text form, and HTML input tags are converted into symbols such as ().

According to this embodiment, if a service interruption unintended by the user occurs, the service can be completed on behalf of the user by reproducing the corresponding session on the basis of the stored session information.

Further, if the user is billed on the basis of the time for which the user has been connected to the Internet, unwanted billing is prevented because this embodiment allows the interrupted service to be completed on behalf of the user.

Furthermore, in a mobile communication system, a radio line is disconnected when it is to be switched to another. According to this embodiment, the user can receive the results of the service immediately after the line has been recovered.

The present invention has been described in detail with respect to preferred embodiments, and it will now be apparent from the foregoing to those skilled in the art that changes and modifications may be made without departing from the invention in its broader aspects, and it is the intention, therefore, in the appended claims to cover all such changes and modifications as fall within the true spirit of the invention.

## Claims

1. A proxy service control method for executing, on behalf of an application stored in a user's terminal, a service being provided on a session set between the application and a server, the method being **characterized by** comprising:
a storage step of storing session information on said session in response to said user's request;
a monitor step of monitoring whether or not said session is being continued between said application and said server;
a proxy step of continuing said session with said server on behalf of said application on the basis of said session information stored in said storage step. if it is determined in said monitor step that said session has been interrupted; and
a transfer step of transferring said service on said session received in said proxy step, to said application.

2. The proxy service control method as claimed in claim 1, **characterized by** further comprising a detection step of detecting an ability of said application to receive said service and a conversion step of converting said service on said session received in said proxy step, into a different reception form on the basis of said ability detected in the detection step, and
**in that** said transfer step transfers said service in said reception form converted in said conversion step.

3. A proxy service control apparatus connected between a user's terminal and a server to execute, on behalf of an application stored in said user's terminal, a service being provided on a session set between the application and said server, the apparatus being **characterized by** comprising:
storage means for storing session information on said session in response to said user's request;
monitor means for monitoring whether or not said session is being continued between said application and said server;
proxy means for continuing said session with said server on behalf of said application on the basis of said session information stored in said storage means, if said monitor means determines that said session has been interrupted; and
transfer means for transferring said service on said session received by said proxy means, to said application.

4. The proxy service control apparatus as claimed in claim 3, **characterized in that** said transfer means includes detection means for detecting an ability of said application to receive said service and conversion means for converting said service on said session received by said proxy step, into a different reception form on the basis of said ability detected by the detection means, and said service is transferred in said reception form converted by the conversion means.

5. A computer-readable recording medium having a program recorded thereon which executes, on behalf of an application stored in a user's terminal, a service being provided on a session set between the application and a server, the recording medium being **characterized in that** the program allows a computer to execute:
a storage step of storing session information on said session in response to said user's request:
a monitor step of monitoring whether or not said session is being continued between said application and said server;
a proxy step of continuing said session with said server on behalf of said application on the basis of said session information stored in said storage step, if it is determined in said monitor step that said session has been interrupted; and
a transfer step of transferring said service on said session received in said proxy step, to said application.

6. The computer-readable recording medium as claimed in claim 5, **characterized by** further comprising a detection step of detecting an ability of said application to receive said service and a conversion step of converting said service on said session received in said proxy step, into a different reception form on the basis of said ability detected in the detection step, and
in that said transfer step transfers said service in said reception form converted in said conversion step.

7. A program executing, on behalf of an application stored in a user's terminal, a service being provided on a session set between the application and a server, the program being **characterized by** allowing a computer to execute:
a storage step of storing session information on said session in response to said user's request;
a monitor step of monitoring whether or not said session is being continued between said application and said server;
a proxy step of continuing said session with said server on behalf of said application on the basis of said session information stored in said storage step, if it is determined in said monitor step that said session has been interrupted; and
a transfer step of transferring said service on said session received in said proxy step, to said application.

8. The program as claimed in claim 7, **characterized by** further comprising a detection step of detecting an ability of said application to receive said service and a conversion step of converting said service on said session received in said proxy step, into a different reception form on the basis of said ability detected in the detection step, and
in that said transfer step transfers said service in said reception form converted in said conversion step.
